# FASCICULE DE BREVET EUROPEEN

(11) **EP 2 366 283 B1**
(45) Date de publication et mention de la délivrance du brevet: **10.08.2016**
(21) Numéro de dépôt: 11157658.3
(22) Date de dépôt: 10.03.2011
(51) Int. Cl.: A01K 1/01

(54) **Bac à litière, en particulier pour chats**
Einstreubehälter, insbesondere für Katzen
Litter tray, in particular for cats

(30) Priorité: 18.03.2010 FR 1051953; 22.06.2010 FR 1054971
(43) Date de publication de la demande: 21.09.2011
(73) Titulaire: Le Mao, Marie-Pascale, 75015 Paris (FR)
(72) Inventeur: Le Mao, Marie-Pascale, 75015 Paris (FR); Pichon, Alain, 75015 Paris (FR)
(74) Mandataire: Cabinet Plasseraud

(56) Documents cités:
- GB-A- 2 440 403
- US-A- 3 100 474
- US-A1- 2009 000 556
- US-B1- 6 408 790

## Description

### DOMAINE DE L'INVENTION

La présente invention concerne les dispositifs à récupération de déchets d'animaux tels que les bacs pouvant recevoir de la matière divisée destinée à recueillir les déjections d'un animal. Dans tout ce qui suit, le terme "litière" est utilisé pour désigner une telle matière.

D'une façon générale, l'invention se rapporte au domaine des bacs à litière, ces bacs pouvant être d'un quelconque format général.

Plus précisément, l'invention concerne un bac à litière, en particulier pour chats, qui comporte :
- une cuvette ayant un fond incliné vers au moins un passage inférieur d'évacuation de liquide ;
- un caisson présentant :
   - un compartiment supérieur permettant de loger la cuvette;
   - un compartiment inférieur en regard dudit passage d'évacuation lorsque la cuvette occupe une position fixe dite fonctionnelle à l'intérieur du compartiment supérieur ;
   - un tiroir collecteur de liquide, le compartiment inférieur étant adapté pour loger le tiroir collecteur en dessous du compartiment supérieur.

### ARRIERE-PLAN TECHNOLOGIQUE DE L'INVENTION

Les bacs à litière pour chats sont destinés à recueillir leurs matières organiques (urines et selles) sur une litière plus ou moins biodégradable selon sa composition et ayant typiquement des propriétés absorbantes ou agglomérantes. Ces bacs peuvent être fermés par un dôme. Le nettoyage des bacs à litière nécessite de démonter le dôme et vider complètement le bac du mélange imprégné. Ce mélange doit être jeté et le bac, entièrement lessivé. Après avoir regarni le bac avec une litière fraîche, la partie formant le dôme (qui a le cas échéant également été lavée) doit être remontée.

Un inconvénient de ces bacs à litière est le nombre élevé de manipulations pour réaliser l'entretien.

Il est également connu, par exemple du document WO 2008/092243 ou du document US6408790, des bacs à litière permettant un écoulement des urines à travers une litière non absorbante. La litière est formée de grains hydrophobes à base d'une matière minérale, d'origine végétale, ou plastique. Ces grains sont posés sur un caillebotis et laissent s'écouler les urines. Le caillebotis s'emboîte avec ajustement serré sur un socle plein, à quatre pentes et à trou central. Les urines suivent les pentes d'écoulement du socle et continuent leur chemin par le trou central, pour être recueillies dans un réservoir. Un dispositif de traitement est prévu dans le bac selon le document WO 2008/092243, ce qui augmente l'encombrement en hauteur de l'ensemble.

Il existe donc un besoin pour simplifier la conception des bacs à litière du type à écoulement des urines. Par ailleurs, il serait également utile de simplifier au maximum les opérations d'entretien de la litière.

### OBJETS DE L'INVENTION

La présente invention a notamment pour but de pallier tout ou partie de ces inconvénients en proposant un bac à litière du type susmentionné et permettant un écoulement des urines à travers une litière préférentiellement non absorbante.

A cet effet, il est proposé selon l'invention un bac à litière selon la revendication 1 dans lequel le caisson présente une première ouverture latérale définissant un accès au compartiment inférieur et au moins une deuxième ouverture latérale par laquelle le compartiment supérieur débouche sur l'extérieur du caisson, la cuvette et/ou un tamis superposable à la cuvette étant mobile en coulissement par rapport au caisson à travers ladite deuxième ouverture latérale pour passer réciproquement d'une position à l'autre entre une position sortie du caisson permettant l'entretien séparé de la cuvette et/ou du tamis, et ladite position fonctionnelle. En outre, le compartiment inférieur est plus étroit que le compartiment supérieur en étant délimité par des parois latérales du caisson, lesdites parois latérales présentant une bordure supérieure au niveau de laquelle le compartiment supérieur débouche dans le compartiment inférieur.

Le compartiment inférieur comporte au moins deux parois latérales avec chacune un bord supérieur qui fait saille par rapport au tiroir collecteur pour supporter la cuvette (ainsi, les mêmes parois peuvent servir à la fois de guidage du tiroir collecteur et de la cuvette: il en résulte une économie de matière et le caisson est plus simple à fabriquer).

Grâce à cette disposition, il est permis de retirer rapidement et séparément la partie supérieure pour pouvoir effectuer le nettoyage de la cuvette, respectivement du tamis, et des granulés. Ceci permet aussi de limiter l'encombrement, en particulier en hauteur, des éléments devant être nettoyés le plus souvent, le caisson pouvant être nettoyé moins fréquemment. En effet, il n'est pas nécessaire que les parois de la cuvette et d'éventuels moyens de préhension soient accessibles par le dessus.

L'agencement du bac à litière offre donc concrètement un gain de temps pour la personne réalisant l'entretien du bac à litière, avec en outre le bénéfice des avantages de la méthode par écoulement (en particulier, il n'est pas nécessaire de renouveler souvent la litière non absorbante et supprime donc l'inconvénient d'avoir à régulièrement acheter et porter des sacs de litière qui sont généralement très lourds).

Dans divers modes de réalisation du bac à litière selon l'invention, on peut éventuellement avoir recours en outre à l'une et/ou à l'autre des dispositions suivantes :
- le caisson présente au moins une paroi latérale avec un bord supérieur s'étendant autour d'une ouverture supérieure du caisson (cette disposition permet un remplissage de la litière par le dessus) ;
- dans le sens de la hauteur, le bord supérieur de la paroi latérale du caisson s'étend essentiellement à un niveau surélevé d'au moins 5 cm par rapport au niveau d'un bord supérieur de la cuvette, la distance entre la base du caisson et ledit bord supérieur de la cuvette étant comprise entre 5 et 15 cm (avec cet agencement, la paroi latérale permet de limiter les projections de litière en dehors du caisson et un accès à la cuvette à moins de 15cm de hauteur peut être prévu, par exemple au niveau d'une échancrure dans la paroi latérale du caisson) ;
- le bac à litière comprend en outre un tamis adapté pour être logé avec un faible jeu à l'intérieur de la cuvette et de façon espacée de moins de 4 cm par rapport au fond de la cuvette, le tamis étant solidaire d'au moins un organe d'espacement par rapport au fond de la cuvette (cette disposition permet de limiter les contacts de liquide avec les éléments constitutifs de la litière, tout en limitant l'encombrement en hauteur de la cuvette) ;
- le tamis présente une forme générale concave avec un point bas qui est proximal par rapport au passage d'évacuation de liquide de la cuvette (le tamis peut donc se superposer sur le fond de la cuvette pour recueillir les granulés de litière à proximité du fond de la cuvette et dans une zone distincte de la zone d'écoulement en pente) ;
- le fond de la cuvette est adapté pour supporter directement et maintenir au niveau du compartiment supérieur une litière dont les éléments constitutifs ont une dimension caractéristique de granulométrie au moins égale à 2mm (dans cette variante de réalisation, le tamis peut être supprimé, le fond présentant par exemple de fins passages d'évacuation de liquide répartis autour d'un axe central de la cuvette et plus nombreux dans une zone centrale du fond ; ces passages peuvent avoir chacun une section de passage qui est inférieure à 1 mm²).
- le bac à litière comprend un tiroir collecteur de liquide, le compartiment inférieur étant adapté pour loger le tiroir collecteur (cette disposition permet de vidanger et nettoyer séparément le tiroir où sont collectés les liquides d'écoulement) ;
- une ouverture supérieure du caisson, ledit passage d'évacuation de la cuvette et le tiroir collecteur sont traversés par un même axe central lorsque la cuvette est placée dans le compartiment supérieur et le tiroir collecteur est placé dans le compartiment inférieur (avec cette disposition alignée, l'évacuation du liquide vers le tiroir collecteur est rapide) ;
- le caisson est formé d'une seule pièce en matière plastique (le caisson peut être léger tout en ayant une grande durée de vie et un coût minimisé par l'utilisation d'un seul moule de fabrication) ;
- le caisson présente des parois à bord supérieur oblique pour soutenir la cuvette, ces parois étant réparties de part et d'autre d'au moins un plan qui contient ledit axe central, et de manière préférée réparties autour de deux plans perpendiculaires sécants au niveau dudit axe central de superposition (cette disposition permet de faire coulisser de manière simple une cuvette à fond incliné et formée d'une seule pièce en plastique, jusqu'à une position fonctionnelle stable dans le compartiment supérieur) ;
- le tiroir collecteur présente une face supérieure avec une concavité définie par une surface externe annulaire de collecte qui s'étend autour d'une ouverture communiquant avec l'intérieur du tiroir collecteur (avec cet agencement, l'orifice de passage de liquide peut avoir une section limitée de façon à limiter la propagation d'odeurs émanant du liquide) ;
- la deuxième ouverture latérale est formée au dessus de la première ouverture latérale, sur un même côté du caisson ;
- le tamis présente un fond et des parois latérales de façon à délimiter un volume intérieur pour recevoir un matériau de litière, le caisson comprenant des moyens d'appui sur lesquels le tamis repose dans ladite position fonctionnelle et permettant un coulissement du tamis sans déplacer la cuvette (avec cet agencement, il est permis un nettoyage rapide du récepteur d'écoulement formé par la cuvette, sans avoir à effectuer une séparation préalable des granulés) ;
- la deuxième ouverture latérale est délimitée en hauteur entre une portion inférieure de paroi latérale du caisson qui est solidaire d'une structure de support de la cuvette et au moins une portion supérieure de paroi latérale du caisson ;
- le caisson présente au moins un compartiment additionnel décalé sur un côté par rapport au compartiment supérieur et au compartiment inférieur, le compartiment additionnel s'étendant sur l'essentiel de la hauteur du caisson et permettant l'insertion d'accessoires d'entretien (avec cette disposition, les selles peuvent être prélevées en utilisant une petite pelle rangée dans un compartiment adjacent au compartiment supérieur servant à recevoir la litière et un autre compartiment voisin peut le cas échéant servir à ranger un cassette dédiée à la dégradation biologique des selles).

Selon une autre particularité, le bac à litière est tel que défini dans les revendications 11 à 13.

Par ailleurs, l'invention a également pour objet une utilisation d'un bac à litière selon l'invention, caractérisée en ce que le bac à litière contient des granulés hydrophobes et essentiellement non poreux dans un volume intérieur défini par la cuvette ou par le tamis. Le bac et les granulés sont préférentiellement à base de polypropylène.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en perspective éclatée du bac à litière selon le premier mode de réalisation de l'invention ;
- la figure 2 est une vue en perspective du bac à litière de la figure 1 dans une configuration fonctionnelle ;
- la figure 3 est une vue similaire à celle de la figure 2, illustrant une façon de garnir le bac à litière ;
- la figure 4 est une vue en coupe de la partie inférieure d'un caisson conforme au premier mode de réalisation du bac à litière ;
- la figure 5 est une vue de face du caisson illustrant par transparence les éléments en contact avec le liquide ;
- la figure 6 est une vue du bac à litière de la figure 2 selon la coupe VI-VI de la figure 4 ;
- la figure 7 est une vue similaire à celle de la figure 2 montrant un bac à litière selon un deuxième mode de réalisation de l'invention ;
- la figure 8 est une vue similaire à celle de la figure 2 montrant un bac à litière selon un troisième mode de réalisation de l'invention ;
- les figures 9A et 9B illustrent l'utilisation d'un tamis complémentaire d'une cuvette à fond incliné conformément à un quatrième mode de réalisation de l'invention ;
- les figures 10A, 10B, 10C et 10D illustrent l'utilisation d'un tamis apte à coulisser indépendamment de la cuvette à fond incliné conformément à un cinquième mode de réalisation de l'invention ;
- les figures 11A et 11B illustrent une variante de réalisation du bac à litière dans un agencement similaire à celui du cinquième mode de réalisation ;
- les figures 12A et 12B montrent un bac à litière avec une variante plus compacte du caisson des figures 11A-11B.

### DESCRIPTION DES MODES DE REALISATION PREFERES DE L'INVENTION

Sur les différentes figures, les mêmes références désignent des éléments identiques ou similaires.

### Premier mode de réalisation

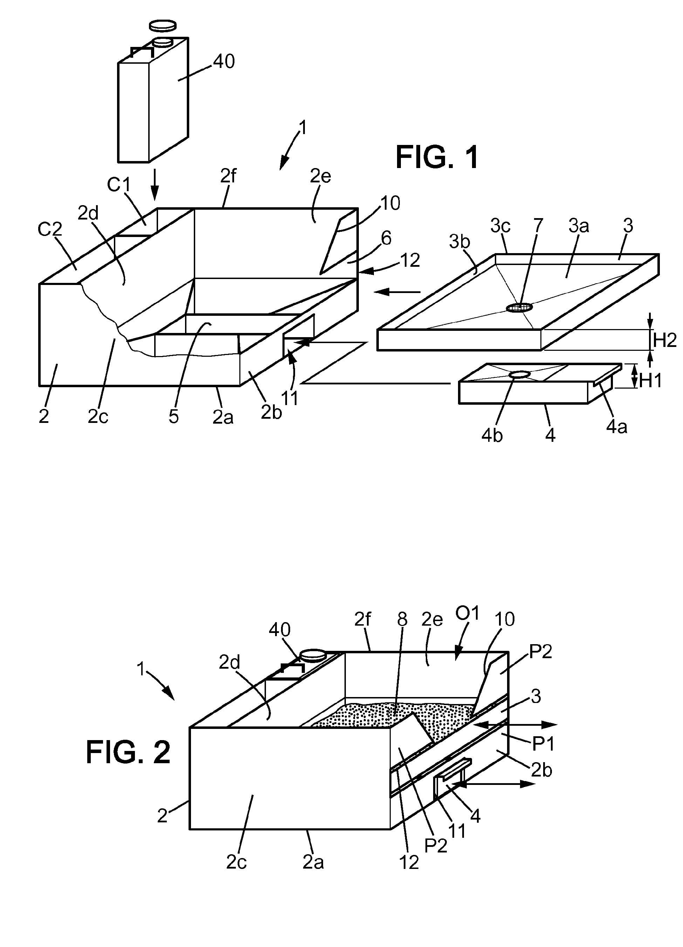

L'invention concerne un bac à litière 1 dont un premier mode de réalisation est bien visible sur les figures 1 et 2 notamment. La litière utilisée est typiquement une litière non absorbante.

Ce bac à litière 1 comporte un caisson 2 qui peut être formé d'une seule pièce et dans lequel s'insèrent un tiroir formé par une cuvette à litière 3 et un tiroir collecteur 4 permettant de stocker les liquides d'écoulement comme l'urine. Ces trois éléments 2, 3, 4 sont par exemple chacun formés d'une seule pièce en plastique. Le caisson 2 forme une structure porteuse qui présente un compartiment inférieur 5 pour loger le tiroir collecteur 4 et un compartiment supérieur 6 pour loger la cuvette 3. Le compartiment supérieur 6 s'étend ici immédiatement au-dessus du compartiment inférieur 5 et un transfert de liquide peut s'effectuer directement sous le seul effet de la gravité entre ces deux compartiments 5,6.

La cuvette 3 présente ici au moins un et préférentiellement plusieurs passages d'évacuation 7 pour les liquides, de façon à permettre un écoulement gravitaire de ces liquides vers le compartiment inférieur 5 lorsque la cuvette 3 est insérée dans le compartiment supérieur 6.

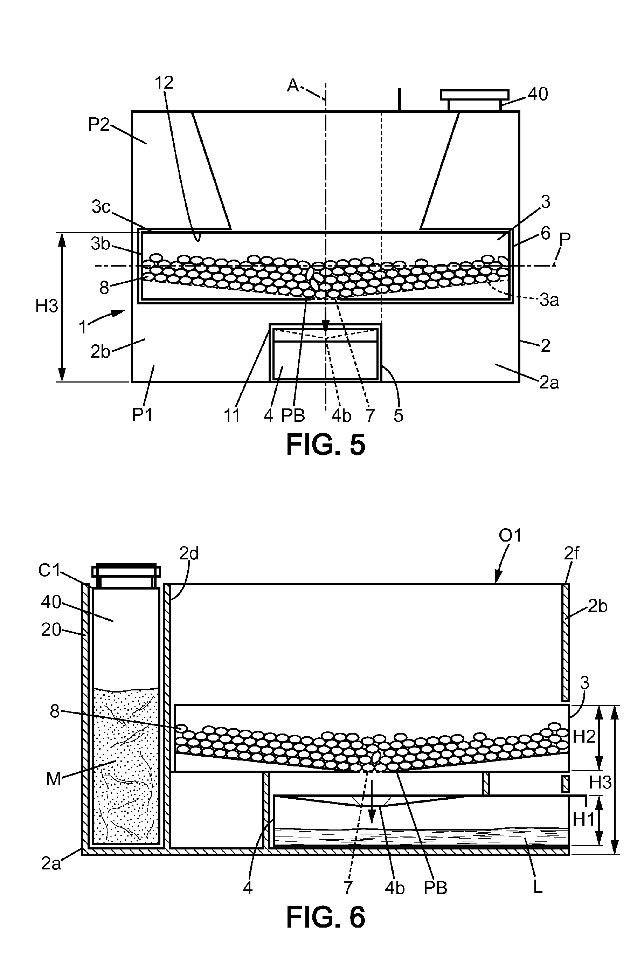

Dans l'exemple des figures 1 et 5-6, une portion centrale du fond 3a de la cuvette 3 correspond à un niveau inférieur ou point bas PB entouré de portions inclinées adjacentes formant des pentes d'écoulement de liquide. Ces portions inclinées s'étendent ici radialement entre le point bas PB et une paroi latérale 3b qui s'étend de façon globalement annulaire autour d'un axe central A de la cuvette 3 et qui définit la hauteur H2 de la cuvette 3. Un passage d'évacuation 7 avec de multiples orifices est formé au niveau de ce point bas PB de la cuvette 3. Les portions inclinées adjacentes sont ici dépourvues de tels orifices (une surface pleine et concave étant donc formée autour du point bas PB). Ces portions inclinées peuvent s'étendre en dessous d'un plan médian P horizontal traversant ladite paroi latérale 3b comme montré dans les figures 5-6. On peut aussi noter que le point bas PB affleure au niveau de séparation entre le compartiment supérieur 6 et le compartiment inférieur 5.

Plus généralement, on comprend que la cuvette 3 présente un fond 3a perméable aux liquides (au moins au niveau du passage d'évacuation 7 dans l'exemple non limitatif des figures) et qui présente une rigidité suffisante pour supporter la litière et un animal avec un minimum de flexion du fond 3a. Le fond 3a de la cuvette 3 est ici incliné vers le ou les passages inférieurs d'évacuation 7 de liquide agencés au niveau du point bas PB de la cuvette 3. Les ouvertures ou orifices sont bien entendu dimensionnées pour permettre l'écoulement du liquide et retenir des granulés 8 formant la litière.

De manière connue en soi, les granulés ont par exemple une dimension caractéristique de granulométrie au moins égale à 2mm. On comprend donc que le fond 3a de la cuvette 3 peut supporter directement et maintenir au niveau du compartiment supérieur 6 les granulés 8 formant la litière, dès lors que les orifices sont suffisamment étroits, avec par exemple des sections de passage inférieures à 1 mm². Ces granulés 8 sont insolubles dans l'eau et peuvent être réutilisés.

En référence aux figures 5 et 6, le compartiment inférieur 5 est agencé en regard d'au moins un passage inférieur d'évacuation 7 pour les liquides lorsque la cuvette 3 est insérée à l'intérieur du compartiment supérieur 6. Le compartiment inférieur 5 présente une face supérieure ouverte pour permettre l'entrée de liquide directement depuis le compartiment supérieur 6.

En référence aux figures 1-3 et 5, le caisson 2 présente au niveau de l'une au moins de ses parois latérales 2b, 2c, 2d, 2e une échancrure 10 pour faciliter l'accès à la cuvette 3. Cette échancrure 10 peut éventuellement permettre de définir une ouverture fermée par une porte ou élément d'obturation similaire monté pivotant lorsque le caisson 2 est associé à un dôme supérieur. L'ouverture s'élargit ici de bas en haut, comme cela est bien visible sur la figure 5. Ce type d'ouverture permet de couvrir de l'ordre de 50% ou davantage de la longueur du côté ouvert, de façon à limiter le risque d'échappement de granulés 8. L'ensemble de la structure dispose ici de parois de protection agencées sur quatre côtés sensiblement perpendiculaire entre eux, couvrant les quatre angles, pour éviter les éventuelles projections de souillures et les projections de litière à l'extérieur du bac.

On notera que l'abaissement de l'accès permis par l'échancrure 10 permet avantageusement de limiter les projections dues à un saut important du chat pour franchir une barrière (que ce soit à l'arrivée du saut où au décollage).

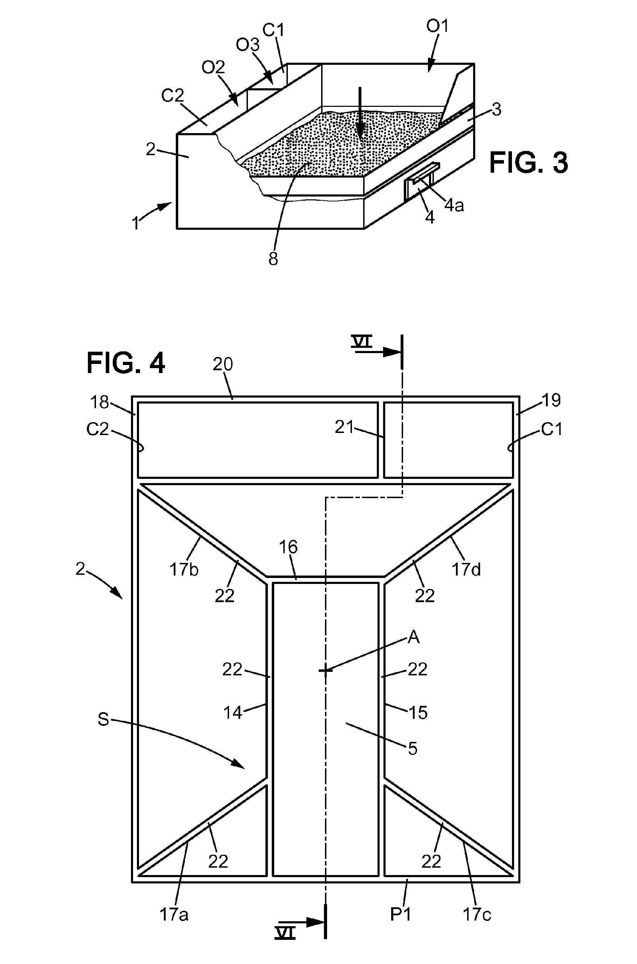

Le caisson 2 présente une première ouverture latérale 11 définissant un accès au compartiment inférieur 5 par un côté du caisson et une deuxième ouverture latérale 12 définissant un accès au compartiment supérieur par le même côté du caisson 2, les deux ouvertures latérales 11, 12 étant ici agencées l'une au dessus de l'autre. Le compartiment supérieur 6 débouche ainsi latéralement sur l'extérieur du caisson 2, ce qui permet d'insérer ou d'extraire la cuvette 3 par un coulissement par rapport au caisson 2 à travers la deuxième ouverture latérale 12. Ici, l'ouverture latérale 12 pour le passage de la cuvette 3 est sensiblement aussi large que la paroi 2b et divise cette dernière entre une portion inférieure P1 de paroi latérale qui est solidaire de la structure de support S (visible sur la figure 4) de la cuvette 3 et une ou plusieurs portions supérieures P2. Bien qu'ici le caisson 2 forme un ensemble monobloc, le caisson 2 peut aussi être alternativement formé de plusieurs pièces pouvant s'emboîter, s'encliqueter ou se fixer d'une quelconque autre façon. Optionnellement, la ou les portions supérieures P2 pourraient être amovibles par rapport à une partie du caisson 2 comprenant la structure S. Le cas échéant, cette portion supérieure P2 amovible ou un élément accessoire d'obturation peut recouvrir l'ouverture latérale 12 et éventuellement permettre un blocage en coulissement de la cuvette 3 à l'intérieur du caisson 2. Un organe de verrouillage en position de la cuvette 3 à litière peut aussi être utilisé en alternative à l'utilisation d'un accessoire d'obturation de l'ouverture latérale 12.

Le tiroir collecteur 4 qui se situe au niveau inférieur du caisson 2 peut présenter une poignée ou une tirette, qui est de préférence intégralement formée par moulage avec le reste du tiroir collecteur 4. Ceci facilite l'opération de coulissement du tiroir collecteur 4, en l'absence d'accès par le dessus. Pour ce qui concerne la cuvette 3, une portion de la paroi latérale 3b librement accessible grâce à l'échancrure 10 permet la préhension de celle-ci pour l'entraîner manuellement en coulissement. Bien entendu, une poignée ou organe similaire de préhension solidaire de la cuvette 3 et prolongeant localement la paroi latérale 3b peut aussi être prévue pour faciliter les opérations d'insertion et extraction de la cuvette 3. On comprend que le coulissement à travers l'ouverture latérale 12 permet d'effectuer un entretien séparé de la cuvette 3 et des granulés 8 formant la litière non absorbante qu'elle contient.

Dans l'exemple représenté et de manière nullement limitative, la cuvette 3 et le tiroir collecteur 4 ont un format sensiblement parallélépipédique et présentent une hauteur H1, H2 sensiblement inférieure aux autres dimensions respectives de ces tiroirs 3, 4. La cuvette 3 s'apparente ainsi à un plateau dont le fond 3a a une forme générale bombée. On peut noter que la cuvette 3 présente en coupe transversale une forme de "H" dont la hauteur est très inférieure aux deux autres dimensions de la cuvette 3. La hauteur H2 peut ainsi représenter moins de 1/4 ou 1/5 de la plus grande dimension de la cuvette 3.

De manière non limitative, le tiroir collecteur 4 peut être d'une hauteur H1 inférieure à 10cm et présenter un format plus petit que celui de la cuvette 3. Dans l'exemple des figures 1 et 6, la hauteur H2 de la cuvette 3 peut être similaire à la hauteur H1 du tiroir collecteur 4 et être inférieure à 10cm.

A titre d'indication nullement limitative, le ratio entre la hauteur de la première ouverture latérale 11 et la hauteur du caisson 2 est comprise entre 2,5 et 5, et préférentiellement entre 3 et 4,5. La largeur du tiroir collecteur 4 est de préférence réduite, en étant par exemple deux ou trois fois moins large que la paroi latérale 2b correspondante du caisson 2.

Dans un mode de réalisation alternatif, des orifices espacés sont formés sur les portions inclinées de la cuvette 3 pour l'évacuation rapide du liquide hors de la zone de stockage des granulés 8 formant la litière. Dans ce cas, le tiroir collecteur 4 présente une ouverture de collecte de liquide plus large (avec dans ce cas un format plus large pour le tiroir collecteur 4) et/ou un système de collecte additionnel par rapport à l'ouverture étroite 4b représentée à la figure 1 est prévu.

En référence aux figures 1-2 et 5-6 le caisson 2 présente une base 2a optionnellement définie par un fond plat ainsi que plusieurs parois latérales 2b, 2c, 2d, 2e avec un bord supérieur 2f qui s'étend autour d'une ouverture supérieure O1 du caisson 2. Dans le sens de la hauteur, le caisson 2 s'étend ainsi entre la base 2a et le bord supérieur 2f et on peut voir que ce bord supérieur 2f s'étend essentiellement à un niveau surélevé, par exemple surélevé d'au moins 5cm, par rapport au niveau d'un bord supérieur 3c de la cuvette 3 lorsque celle-ci occupe sa position fonctionnelle dans le compartiment supérieur 6. Un surplus de hauteur compris entre 5 et 20cm pour les parois latérales 2b, 2c, 2d, 2e par rapport au bord supérieur 3c de la cuvette 3 permet de limiter les projections de litière en dehors du caisson 2. Le bord supérieur 3c s'étend ici de manière annulaire.

Avec ce type de disposition et comme cela est visible sur les figures 5-6, on comprend que la hauteur H3 définie entre la base 2a du caisson 2 et le bord supérieur 3c de la cuvette 3 et réduite et peut être comprise entre 5 et 15cm. Cette faible hauteur H3 permet à un animal à l'agilité réduite (chat ayant un handicap par exemple) d'accéder sans difficulté à la cuvette 3 où sont amassés les granulés 8 formant la litière.

Les granulés 8 sont en matière non poreuse et hydrophobe, par exemple en polypropylène. Un avantage du polypropylène est sa dureté (dureté shore- échelle D de 200) et son faible pourcentage d'absorption d'eau, de l'ordre de 0,2%. Le bac à litière 1 peut d'ailleurs avantageusement être entièrement réalisé avec des pièces en polypropylène ou matière plastique aux propriétés similaires. La très grande dureté du polypropylène, sa résistance à la fissuration et sa durée de vie assurent au bac à litière, une solidité sur le long terme pour un usage pluriquotidien le cas échéant par plusieurs chats.

Les granulés 8 qui n'absorbent pas le liquide servent essentiellement à dissimuler les selles et à compenser l'inclinaison du fond 3a de la cuvette 3. La surface supérieure formée par les granulés 8 est ainsi sensiblement au même niveau, ce niveau étant ici intermédiaire entre le bord supérieur 3c de la cuvette 3 et le niveau de jonction du fond 3a avec le reste de la cuvette 3, comme illustré sur les figures 5 et 6.

Le tiroir collecteur 4 présente par exemple une face supérieure avec une concavité définie par une surface externe annulaire de collecte du liquide ayant traversé les granulés 8 et les passages d'évacuation 7. La concavité forme une surface pleine qui s'étend de façon annulaire autour de l'ouverture 4b, de sorte que tout le liquide parvenant dans le compartiment inférieur s'écoule à l'intérieur du tiroir collecteur 4. Le tiroir collecteur 4 peut consister en une cassette en polypropylène dont tout ou partie de la face supérieure est conformée de la même façon que la forme concave du fond 3a de la cuvette 3 à litière. Les deux concavités sont placées en vis-à-vis comme cela est visible sur la figure 6.

Le tiroir collecteur 4 peut présenter une ouverture de vidange distincte de l'ouverture étroite 4b et distante du fond du tiroir. Cette ouverture de vidange peut présenter un bec verseur et est par exemple agencée en angle. La capacité de collecte en liquide L du tiroir collecteur 4 est de préférence supérieure ou égale à 800mL, et par exemple comprise entre 1200 et 1600mL. Ce tiroir collecteur 4 est de préférence allongé suivant la direction de coulissement.

La structure du caisson 2 va à présent être plus particulièrement décrite en liaison avec les figures 1 et 4.

Le caisson 2 peut présenter une seule paroi qui définit la base 2a du caisson 2 et une pluralité de parois perpendiculaires à la base 2a, parmi lesquelles on a :
- un premier groupe de parois latérales 2b, 2c, 2d, 2e entourant les compartiments inférieur 5 et supérieur 6, et définissant un premier volume intérieur du caisson 2 à l'intérieur duquel est placé la litière;
- un deuxième groupe de parois 14, 15, 16 formées dans le premier volume intérieur du caisson 2 et définissant le compartiment inférieur ;
- un troisième groupe de parois 17a, 17b, 17c, 17d dont chacune fait la jonction entre au moins une paroi du premier groupe et une paroi du deuxième groupe ; et
- un quatrième groupe de parois 18, 19, 20, 21 permettant de définir des compartiments additionnels C1, C2 décalés sur un côté par rapport au compartiment inférieur 5 et au compartiment supérieur 6.

Comme illustré sur les figures 1 et 4, la majorité des parois 14, 15, 16, 17a, 17b, 17c, 17d du deuxième et du troisième groupe permet de supporter la cuvette 3. Tandis que les parois latérales 14, 15, 16 présentent un bord supérieur qui s'étend essentiellement parallèlement à la base 2a, les parois 17a, 17b, 17c, 17d présentent chacune un bord supérieur oblique (de manière continue ou discontinue) à composante inclinée depuis un niveau supérieur jusqu'à un niveau inférieur qui correspond au niveau du bord supérieur des parois 14, 15, 16 qui définissent le compartiment inférieur 5. Les zones d'appui 22 de la cuvette 3 définies par les bords supérieur des deux parois longitudinales 14, 15 et les bords supérieurs des parois 17a, 17b, 17c, 17d du quatrième groupe sont indiquées sur la figure 4. On comprend qu'au moins les deux parois latérales longitudinales 14, 15 du compartiment inférieur 5 ont leur bord supérieur qui fait saillie par rapport au tiroir collecteur 4. Ainsi ce dernier reste distant du point bas PB de la cuvette 3, de manière à éviter le risque de blocage du tiroir collecteur 4 par le fond 3a de la cuvette 3.

Les parois 17a, 17b, 17c, 17d du quatrième groupe sont réparties ici de part et d'autre de deux plans perpendiculaires sécants entre eux au niveau de l'axe central A de la cuvette 3. On comprend que les parois du quatrième groupe permettent également de rigidifier les parois verticales 14, 15, 16 définissant le compartiment inférieur 5. Les parois 17a et 17d peuvent être alignées et les parois 17b et 17c peuvent également être alignées.

Dans une variante de réalisation, des parois prévues pour supporter la cuvette 3 peuvent recouvrir tout ou partie des espaces inférieurs formés entre les parois 17a et 17b, 17b et 17d, 17c et 17d, 17a et P1, 17c et P1. Ces parois additionnelles peuvent être sensiblement planes et suivent par exemple les inclinaisons du fond 3a de la cuvette 3. Le compartiment inférieur 5 reste de préférence non couvert mais pourrait également être partiellement couvert.

Dans l'exemple illustré, deux compartiments additionnels C1, C2 s'étendent sur l'essentiel de la hauteur du caisson 2 et permettent l'insertion d'accessoires d'entretien.

Un avantage de la structure du caisson 2 est qu'elle permet d'offrir un côté très pratique pour l'entretien courant du bac à litière, tout en permettant une conception par moulage de matière plastique en une seule pièce.

### Deuxième mode de réalisation

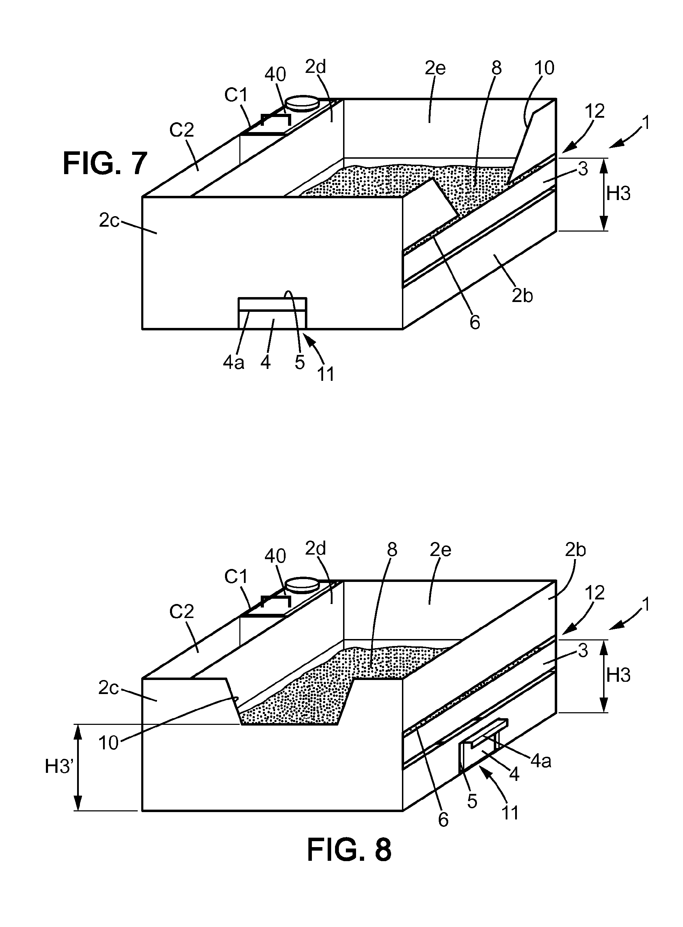

Le deuxième mode de réalisation est bien visible sur la figure 7 et ne diffère pas dans son fonctionnement d'un bac à litière conçu selon le premier mode de réalisation. La litière utilisée est toujours une litière non absorbante et la cuvette 3 et le tiroir collecteur 4 sont ici identiques à ce qui a été décrit en référence aux figures 1-6.

La seule différence réside dans la disposition du compartiment inférieur 5 qui débouche sur un côté différent du côté où sont agencés l'échancrure 10 et l'ouverture 12 pour le coulissement de la cuvette 3. Ainsi, le tiroir collecteur 4 est accessible sur un côté latéral moins visible. Cette disposition peut aussi permettre de prévoir dans la paroi 2b, juste en dessous de l'ouverture pour le passage du chat, une ouverture qui facilite la préhension de la cuvette 3 par le dessous. Une disposition analogue, avec une ou plusieurs ouvertures éventuellement décalées par rapport à l'ouverture 11 pour le tiroir collecteur 4, peut être prévue dans les autres modes de réalisation.

### Troisième mode de réalisation

Le troisième mode de réalisation est bien visible sur la figure 8 et ne diffère pas dans son fonctionnement d'un bac à litière conçu selon le premier mode de réalisation. La litière utilisée est toujours une litière non absorbante et la cuvette 3 et le tiroir collecteur 4 sont ici identiques à ce qui a été décrit en référence aux figures 1-6.

La seule différence réside dans la réalisation de l'échancrure 10, qui est cette fois formée sur un côté différent du côté où sont agencés l'ouverture 11 pour permettre le coulissement du tiroir collecteur 4 et l'ouverture 12 pour le coulissement de la cuvette 3. Ainsi, la direction de coulissement de la cuvette 3 est différente de la direction d'entrée ou de sortie du chat à travers l'ouverture d'accès à la litière.

Bien entendu, cette particularité peut être utilisée en combinaison avec n'importe quel agencement du tiroir collecteur 4, qui peut être disposé comme dans l'exemple de la figure 7, du même côté que l'échancrure 10 ou à l'opposé.

La hauteur H3' correspondant au seuil de franchissement peut bien entendu être la même que la faible hauteur H3 définie entre la base 2a du caisson 2 et le bord supérieur 3c comme montré dans les exemples des figures 6 et 7 ou éventuellement être un peu supérieure pour améliorer la fonction de protection vis-à-vis des éventuelles projections de matière à l'extérieur du bac 1.

### Quatrième mode de réalisation

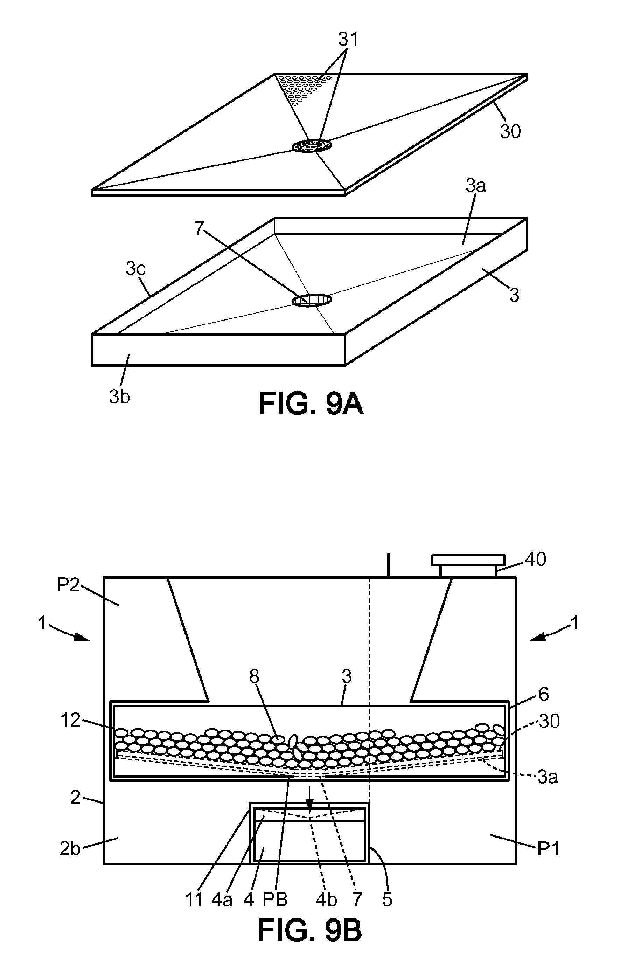

Le quatrième mode de réalisation est illustré en liaison avec les figures 9A-9B et ne diffère dans son fonctionnement d'un bac à litière conçu selon le premier mode de réalisation que par un écoulement de type laminaire et sans contact avec les granulés sur le fond 3a de la cuvette 3, grâce à l'utilisation d'un tamis 30 superposé à ce fond 3a. On comprend en effet que le liquide s'écoule à travers ce tamis 30 avant de glisser sur les portions inclinées du fond 3a de la cuve 3.

En référence à la figure 9A, le tamis 30 peut être un tamis à mailles ronde ou perforations 31 similaires, par exemple en polypropylène, ou tout autre tamis à base d'une matière peu mouillable. Le tamis 30 a ici une même forme concave ou une forme concave comparable à celle du fond 3a de la cuvette 3 et vient se superposer. Le double fond créé entre le tamis à mailles et la cuvette 3 formant tiroir permet de réduire au strict minimum le contact des granulés 8 avec le liquide, de sorte qu'ils peuvent en pratique être considérés comme secs. Les zones centrales respectives de la cuvette 3 et du tamis 30 forment ici des points bas qui présentent des perforations 31 et 7. Le point bas du tamis 30 est ici proximal par rapport au passage(s) d'évacuation(s) 7 de liquide de la cuvette 3.

La figure 9B montre la complète similitude d'agencement avec le premier mode de réalisation (voir figure 5). L'espacement entre le tamis 30 et le fond 3a est permis par des pattes ou organes similaires, un rebord périphérique ou une combinaison de ces possibilités. Le tamis 30 présente une forme adaptée pour être logé avec un faible jeu à l'intérieur de la cuvette 3 et de façon espacée de moins de 4cm, et de préférence de moins de 2cm, par rapport au fond 3a.

### Cinquième mode de réalisation

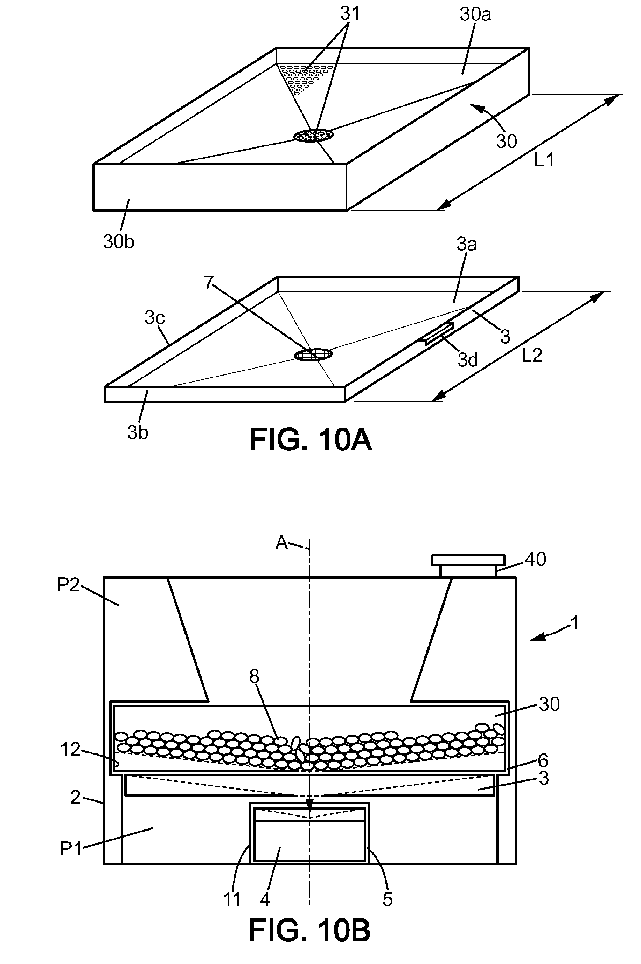

Dans l'exemple des figures 10A-10D, le tamis 30 présente un fond 30a avec une pluralité de perforations 31 et une paroi latérale 30b qui s'étend de façon globalement annulaire, de préférence de manière analogue à la paroi annulaire 3b de la cuvette 3, autour de l'axe central A. Le fond 30a du tamis 30 présente ici des pentes descendantes vers une zone centrale pour compenser la tendance des granulés 8 à s'écarter vers le bord lorsque un animal tel qu'un chat pénètre dans le bac 1. Des raidisseurs tels que des nervures sont par exemple prévus à la jonction entre deux pentes adjacentes. Alternativement, le fond 30a du tamis 30 peut être plat et la paroi latérale 30b suffisamment haute pour éviter la perte de granulés 8 (le niveau de remplissage des granulés pouvant aussi bien entendu être ajusté).

La cuvette 3 présente ici une forme analogue à ce qui a été illustré dans la figure 9A mais peut présenter une moindre hauteur. On comprend que la cuvette 3 est ici un récepteur d'écoulement (tel un entonnoir) qui n'est pas en contact avec les granulés 8 retenus par le tamis 30. De manière non limitative, la hauteur de la paroi latérale de la cuvette 3 est ici par exemple comprise entre 15mm et 50mm tandis que la hauteur du tamis 30 peut être comprise entre 50 et 90mm. Toutes les perforations 31 du tamis 30 sont en regard du fond 3a de la cuvette 3. De préférence, la forme et les dimensions des fonds respectifs 30a et 3 du tamis 30 et de la cuvette 3 coïncident. Ainsi comme illustré par la flèche de la figure 10B, les écoulements de liquide verticaux qui passent à travers le tamis 30 sont entièrement reçus par la cuvette 3 pour guider ensuite le liquide vers les passages d'évacuation 7 situés en regard du tiroir collecteur 4.

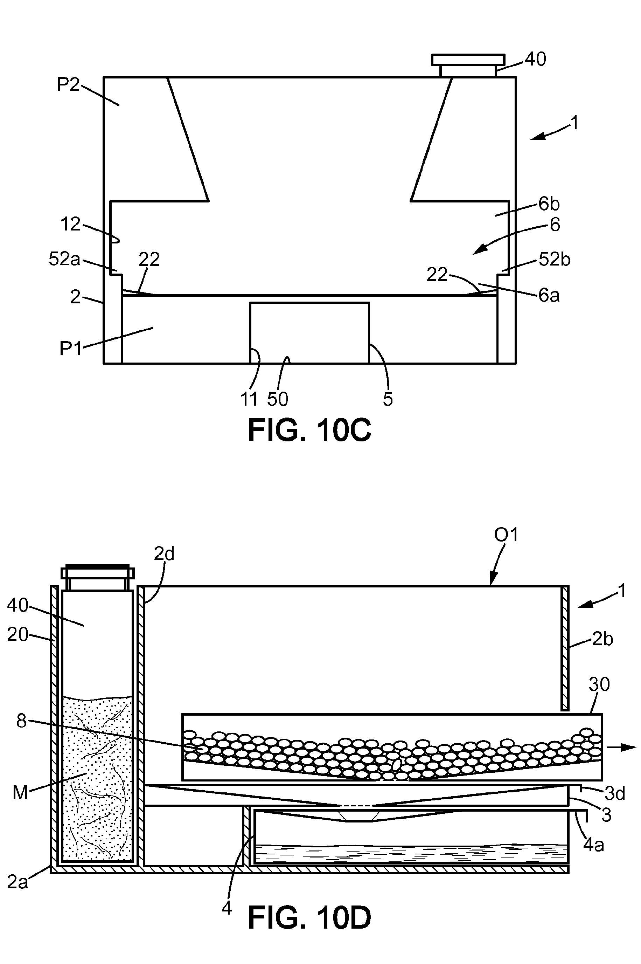

En référence aux figures 10B et 10C, le tamis 30 présente au moins deux dimensions supérieures aux dimensions correspondantes de la cuvette 3. Il s'agit d'une part de la hauteur, et d'autre part de la largeur L1 qui excède légèrement la largeur L2 de la cuvette 3. La largeur L1 du tamis 30 est très légèrement inférieure à l'espacement entre les parois opposées 2c, 2e (figure 2) du caisson 2, de sorte que le jeu latéral entre le tamis 30 et le caisson 2 est faible. En outre le côté arrière du tamis 30 vient en appui contre le caisson 2 dans sa position fonctionnelle, de sorte que les granulés 8 ne peuvent pas tomber entre le tamis 30 et le caisson 2 dans cette position fonctionnelle. Des épaulements continus 52a, 52b du caisson 2 ou des moyens d'appui similaires, formés sur les deux côtés opposés du compartiment supérieur 6, permettent au tamis 30 plus large de reposer sur la structure du caisson 2. Un coulissement du tamis 30 est permis sans déplacer la cuvette 3 qui repose sur des zones d'appui formées à un niveau inférieur (voir la figure 4 et la figure 10C pour les zones d'appui 22). Le tiroir collecteur 4 peut coulisser, sans modifier la position de la cuvette 3, sur le fond 50 du caisson 2 pour passer de la position sortie pour le nettoyage à sa position fonctionnelle et vice versa.

Pour minimiser la hauteur d'accès à la litière, on peut prévoir dans un mode réalisation préféré, à la différence du caisson 2 illustré sur les figures 1-6, qu'aucun élément de séparation du caisson 2 ne soit placé entre la première ouverture latérale 11 et la deuxième ouverture latérale 12. La figure 10D montre que la cuvette 3 en position fonctionnelle est très faiblement espacée du tamis 30 et du tiroir collecteur 4 (moins de 4-5mm d'écart par exemple). En référence aux figures 10C et 10D, on distingue dans le compartiment supérieur 6 :
- un premier emplacement pour le tamis 30 qui correspond à un premier sous-volume 6b du compartiment supérieur 6 ; et
- un deuxième emplacement pour la cuvette 3 qui correspond à un deuxième sous-volume 6a du compartiment supérieur 6.

Cet agencement de la cuvette 3 et du tamis 30 est bien entendu compatible avec la localisation de l'échancrure 10 montrée sur la figure 8 et/ou avec la localisation de la première ouverture latérale 11 montrée sur la figure 7. On comprend également que le caisson 2 peut présenter éventuellement trois ouvertures latérales complètement séparées réparties sur un, deux ou trois côtés différents du caisson 2, de façon à pouvoir extraire sélectivement le tiroir collecteur 4, la cuvette 3 ou le tamis 30. La possibilité d'enlever séparément le tiroir collecteur 4 et la cuvette 3 sans toucher au reste est un avantage pour l'utilisateur qui peut ainsi nettoyer rapidement les deux éléments les plus contaminés par le liquide drainé (il s'agit donc des éléments du bac à litière dont la fréquence de nettoyage est plus élevée).

La première ouverture latérale 11 est de préférence au moins deux fois moins large par rapport à la largeur correspondante du caisson 2 et la largeur de la deuxième ouverture latérale 12. Comme cela est visible sur les figures 10B et 10C, la première ouverture latérale 11 peut être délimitée supérieurement par un élément de façade du caisson 2 séparant entre elles les première et deuxième ouvertures 11, 12. La deuxième ouverture latérale 12 est en partie délimitée supérieurement par le ou les bords inférieurs des portions P2 de paroi du caisson 2. Ces délimitations supérieures ont, comme les délimitations latérales, une fonction de guidage qui facilite l'insertion et l'extraction des pièces amovibles 30, 3, 4 du bac à litière 1. Un ou plusieurs organes de verrouillage en position du tamis 30, de la cuvette 3 et/ou du tiroir collecteur 4 peuvent être prévus.

### Sixième mode de réalisation

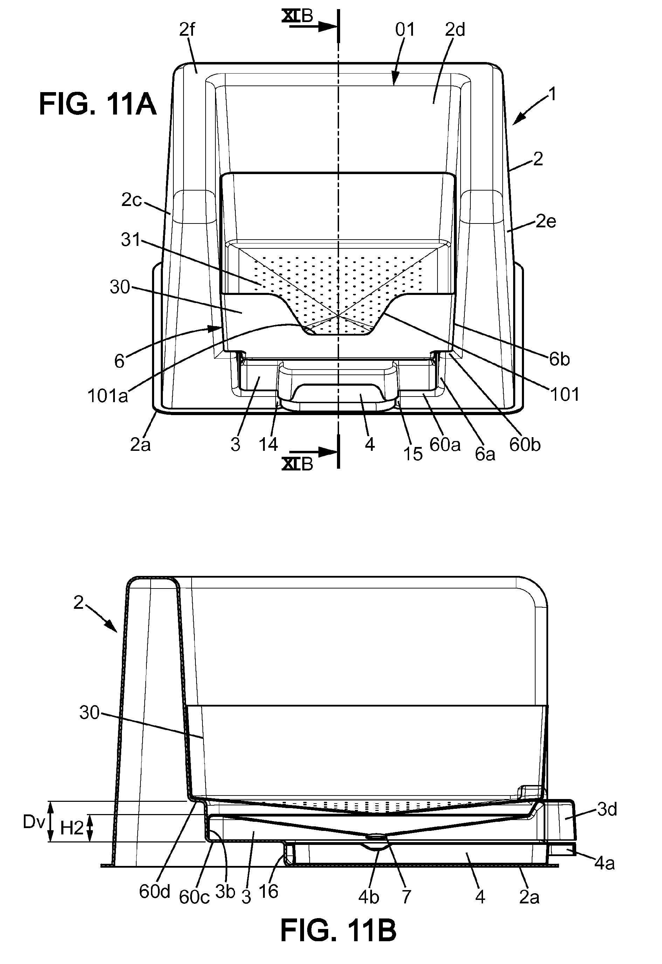

Dans l'exemple des figures 11A-11B, le caisson 2 du bac à litière 1 peut consister en une pièce monobloc ou éventuellement en un assemblage de plusieurs pièces. Le caisson 2 peut présenter une forme générale similaire au caisson des modes de réalisation précédemment décrits, avec une base 2a et plusieurs parois latérales 2c, 2d, 2e qui forment un bord supérieur 2f, ici préférentiellement en "U", qui s'étend autour de l'ouverture supérieure O1 du caisson 2.

Comme dans le quatrième mode de réalisation, le compartiment supérieur 6 peut se subdiviser en deux sous-volumes 6a, 6b pour respectivement loger la cuvette 3 et le tamis 30. Le compartiment inférieur 5 plus étroit est délimité par des parois internes, de préférence trois parois latérales 14, 15, 16 de façon similaire à ce qui a été décrit pour le premier mode de réalisation (voir figure 4 par exemple). Ces parois latérales 14, 15, 16 présentent une bordure supérieure au niveau de laquelle le compartiment supérieur 6 débouche dans le compartiment inférieur 5. Dans l'exemple non limitatif des figures 11A-11B, le compartiment supérieur 6 présente un étagement au niveau des faces internes du caisson 2, de sorte que le sous volume 6b pour le tamis 30 peut être plus large que le sous-volume 6a pour la cuvette 3. Le tamis 30 peut reposer ainsi sur un épaulement ou des rebords internes 60b du caisson 2, de même que la cuvette 3 peut reposer sur un épaulement ou des rebords de support 60a définis au niveau de la bordure supérieure des parois latérales 14, 15, 16.

Plus généralement, on comprend que le caisson 2 peut présenter au moins deux zones de soutien de la cuvette 3 et au moins deux zones de soutien du tamis 30, ces zones pouvant être agencées de manière étagée selon la direction verticale lorsque le caisson 2 repose sur sa base 2a. Les rebords de support 60a, surélevés par rapport à la base 2a, forment chacun une face supérieure (ici typiquement rectangulaire) ayant une longueur comprise entre la moitié et la totalité de la longueur de la cuvette 3 et une largeur inférieure à la moitié de la largeur de la cuvette 3. De la même façon, les rebords de support 60b, surélevés par rapport aux rebords 60a, forment chacun une face supérieure (ici typiquement rectangulaire) ayant une longueur comprise entre la moitié et la totalité de la longueur du tamis 30 et une largeur inférieure à la moitié de la largeur du tamis 30. La forme rectangulaire n'est donnée qu'à titre d'exemple et les rebords 60a peuvent former une face supérieure de forme différente. Bien entendu, la largeur des rebords 60a, 60b peut être minimisée pour limiter l'encombrement du caisson 2. Chacun des rebords 60a est de préférence plus large qu'un des rebords 60b, ce qui permet de réduire significativement la largeur du tiroir collecteur 4 (on obtient par exemple une réduction d'au moins 1/3 par rapport à la largeur de la cuvette 3). La cuvette 3 a en revanche ici une largeur L2 peu différente de la largeur L1 du tamis 30 comme dans le quatrième mode de réalisation (voir figures 10A-10B), les deux rebords 60b ayant par exemple chacun une largeur inférieure à 5cm et/ou inférieure à 10% de la largeur L1 du tamis 30.

En référence à la figure 11A, la face avant 35 du tamis 30 présente une échancrure 101 pour abaisser le niveau d'accès dans le volume intérieur où est disposé le matériau de litière. Le bord supérieur du caisson 2 s'étend ici bien au-dessus du niveau du bord supérieur du tamis 30, de sorte que les parois 2c, 2d, 2e du caisson 2 ont une fonction anti-projection de litière.

La figure 11B illustre une vue en coupe selon le plan XIB-XIB visible sur la figure 11A. Sur cette figure, on peut voir que le caisson 2 présente des rebords internes étagés 60c, 60d. Le rebord interne 60c soutient une portion arrière de la cuvette 3 et est contigu à deux rebords 60a. On forme ainsi une zone ayant une forme générale de U pour soutenir la cuvette 3. De manière analogue, le rebord interne 60d soutient une portion arrière du tamis 30 et est contigu à deux rebords 60b. Une zone ayant une forme générale de U est ainsi obtenue pour soutenir le tamis 30. Dans cet exemple la distance verticale Dv entre les deux zones respectives de soutien est supérieure à la hauteur H2 de la paroi latérale 3b de la cuvette 3

Dans une variante de réalisation, le tamis 30 peut être bloqué en translation dans le caisson 2 lorsqu'il est superposé à la cuvette 3. A titre d'exemple, un blocage en coulissement sur les épaulements ou rebords internes 60b est permis par des moyens de butée formés intégralement avec le caisson, amovibles ou mobiles entre une position de blocage et une position de déblocage. Les moyens de butée comportent par exemple une ou plusieurs projections formées sur les rebords internes 60b, en position adjacente à la deuxième ouverture latérale 12 (ici au niveau du débouché latéral du premier emplacement formant le sous-volume 6b).

### Septième mode de réalisation

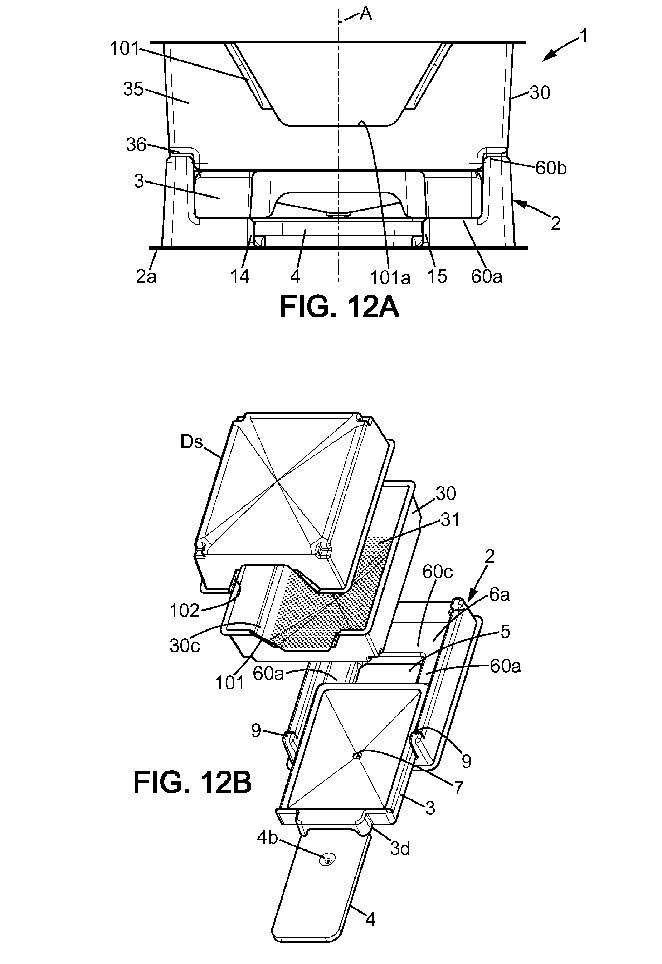

Dans l'exemple des figures 12A-12B, le caisson 2 du bac à litière 1 peut consister en une pièce monobloc ou éventuellement en un assemblage de plusieurs pièces et diffère du sixième mode de réalisation par une hauteur réduite et en ce que le tamis 30 vient se superposer au caisson 2. Le maintien du tamis 30 est ici facilité par des moyens de butée pouvant comprendre une ou plusieurs projections 9 formées sur les rebords 60b. Quatre projections 9 sont agencées au niveau des quatre angles du caisson 2 dans l'exemple de la figure 12B. Optionnellement, une ou plusieurs parties femelles (36) peuvent être formées dans un angle inférieur de la paroi avant 35 du tamis 30 pour coopérer avec les projections 9.

Le tamis 30 peut être identique ou non à celui illustré dans les figures 11A-11B. Les perforations 31 sont formées dans le fond 30a du tamis 30 et une pente périphérique 30c peut être prévue au niveau de la jonction entre la paroi latérale 30b et le fond 30a.

Ici le caisson présente une hauteur réduite qui peut être inférieure à 40cm, et de préférence inférieure à 30cm. On peut voir que le niveau d'accès abaissé défini au niveau du bord 101 a de l'échancrure 101 du tamis 30 est plus élevé que le niveau de la bordure supérieure du caisson 2. Une économie importante de matière est réalisée pour le caisson 2 par rapport à l'exemple des figures 11A-11B.

Un dôme DS optionnel peut être avantageusement utilisé afin de couvrir le tamis 30 (la fonction anti-projection de litière étant ainsi également obtenue). Dans cet exemple, la forme externe du dôme Ds est identique à celle du tamis 30, de sorte qu'un moule commun peut être utilisé pour le formage de ces pièces en plastique. A l'exception par exemple des orifices 31, le dôme Ds peut être complètement identique au tamis 30, avec notamment une échancrure 102 qui forme en combinaison avec l'échancrure 101 une ouverture d'accès pour l'animal. Des moyens d'encliquetage ou des reliefs qui coopèrent peuvent être répartis sur le dôme Ds et le tamis 30 pour assurer le maintien en position superposée du dôme Ds. Bien entendu, tout autre type de dôme peut être utilisé, par exemple avec au moins une partie mobile articulée ou amovible libérant l'accès par le haut au tamis 30.

Le fonctionnement du bac à litière va à présent être décrit en liaison avec les figures 3, 5-6,t 9A-9B, 10A-10D et 11B.

Le fonctionnement est le même pour chacun des modes de réalisation précédemment décrits, avec la seule particularité pour les quatrième, cinquième et sixième modes de réalisation que le liquide s'écoule à travers un tamis 30 avant de glisser sur les portions inclinées du fond 3a de la cuve 3.

Comme cela est visible sur la figure 3, les granulés 8 peuvent être placés dans la cuvette 3 à litière dans une position fonctionnelle de cette cuvette 3 dans le caisson 2. La flèche descendante de la figure 3 illustre cette étape préalable de mise en place du granulat. Dans les quatrième et cinquième modes de réalisation, les granulés 8 sont placés sur le tamis 30.

Les granulés 8 peuvent être également placés dans la cuvette 3 à litière dans une position de cette cuvette 3 hors du bac à litière 1. Une insertion de la cuvette 3 garnie, par l'ouverture latérale 12, assure une position fonctionnelle de l'ensemble. Dans le cinquième mode de réalisation, le tamis 30 rempli des granulés 8 est inséré par le côté pour se superposer à la cuvette 3.

On comprend que les selles peuvent être prélevées du lit de granulat à l'aide d'une petite pelle, sac ou outil similaire et sont de préférence aussitôt jetées dans un récipient dédié. Il peut s'agir d'un bidon ou d'une cassette 40 obturable à l'aide d'un bouchon amovible, collecteur de selles comme illustré à la figure 6. La fermeture du bouchon est de préférence étanche aux fluides (gaz/liquide). Il est prévu ici un bouchon à vis étanche. Cette cassette 40 contient préalablement un mélange M d'eau et de produit de dégradation biologique de matières fécales. L'unique ouverture obturée par le bouchon sert à la fois pour le remplissage et la vidange de la cassette 40. Sa capacité est de préférence supérieure à la capacité du tiroir collecteur, et par exemple comprise entre 1500 et 2500mL. Comme pour le contenu liquide du tiroir collecteur 4, le contenu de la cassette 40 ne doit pas dépasser un niveau seuil de remplissage. La cassette 40 est donc vidée, selon son niveau de remplissage, dans le réseau des eaux usées (égouts) qui sont ensuite traitées par les stations d'épuration.

L'un des compartiments additionnels C1, C2 du caisson 2 permet de ranger la cassette 40 de préférence avec un faible jeu, tandis que l'autre des compartiments additionnels C1, C2 permet de loger une pelle et/ou un produit de dégradation des excréments. Le compartiment C1 pour la cassette 40 présente une ouverture supérieure unique 03 et le compartiment C2 présente une ouverture supérieure unique 02 qui est ici plus grande que l'ouverture 03. Ces compartiments C1, C2 sont formés ici à l'opposé de la paroi 2b à travers laquelle le compartiment supérieur 6 débouche latéralement.

Pour ce qui concerne la collecte de liquide, un chemin d'écoulement à composante verticale ou incliné (sur les pentes du fond 3a de la cuvette 3 et sur le système de collecte formant entonnoir du tiroir collecteur 4) permet, sous l'effet de la gravité, de faire passer le liquide du compartiment supérieur 6 vers l'intérieur du tiroir collecteur 4 placé dans le compartiment inférieur 5. Comme illustré à la figure 5, lorsque la cuvette 3 est dans sa position fonctionnelle, dans le compartiment supérieur 6, et quand le tiroir collecteur 4 est dans sa position de fonctionnement, l'ouverture supérieure O1 du caisson 2, le ou les passages d'évacuation 7 de la cuvette 3 et le tiroir collecteur 4 sont traversés par un même axe central A. Ainsi, le chemin d'écoulement peut être particulièrement court. Dans l'exemple de la figure 9B, le temps pour évacuer le liquide est encore plus court.

La cuvette contient de préférence des granulés hydrophobes 8 essentiellement non poreux qui peuvent être lavés et réutilisés. Pour permettre de laver séparément le granulat formant la litière, il suffit de retirer horizontalement la cuvette 3, de la même façon que peut être effectué le retrait du tiroir collecteur 4. La cuvette 3 de faible hauteur peut alors être vidée sans difficulté.

Dans l'exemple des figures 10A-10D et 11A-11B, l'écoulement est complètement similaire au cas des figures 9A-9B, c'est-à-dire avec un écoulement en pente plus rapide au niveau de la cuvette 3, à distance des granulés 8 retenus par le tamis 30, le contact de liquide avec ces granulés 8 étant minimisé.

Un des avantages du bac à litière 1 selon l'invention est que la manipulation de ses éléments constitutifs est aisée et le tout s'assemble très facilement (cf. Figure 1). Des poignées 3d, 4a qui font saillie ou non par rapport au volume global du caisson 2 sont par exemple prévues sur une paroi frontale pour faciliter le retrait individuel de la cuvette 3 et du tiroir collecteur 4, respectivement. Par ailleurs, la cuvette et/ou le tiroir collecteur 4 peuvent présenter des clips formés sur les parois latérales à proximité de la paroi frontale pour s'engager avec un relief complémentaire formé sur une face interne en vis-à-vis des parois 2c et 2e du caisson 2. Ces clips permettent un encliquetage ou un engagement analogue qui peut être avantageusement entendu par l'utilisateur lorsque l'élément amovible tel que la cuvette 3 ou le tiroir collecteur 4 atteint sa position fonctionnelle. Un tel encliquetage ou verrouillage similaire des positions fonctionnelles permet de s'assurer notamment du bon positionnement relatif entre la cuvette 3 et le tiroir collecteur 4. Un tel système de verrouillage est optionnel et le bon positionnement du tiroir collecteur 4, de la cuvette 3 et/ou du tamis 30 peut être aussi visuellement contrôlé par le complet enfoncement de ces éléments dans le volume intérieur respectif des compartiments inférieur et supérieur 5, 6.

On comprend que chacune des formes et des détails de réalisation décrits précédemment peuvent être utilisés isolément ou en combinaison. Il doit être évident pour les personnes versées dans l'art que la présente invention permet des modes de réalisation sous de nombreuses autres formes spécifiques sans l'éloigner du domaine d'application de l'invention comme revendiqué. Ainsi, bien que les figures montrent un caisson de forme générale parallélépipédique, il doit être compris que d'autres formes sont possibles, par exemple avec une paroi latérale courbée en remplacement des parois latérales 2c, 2d, 2e ou encore avec une forme générale partiellement ovoïde. De la même façon, la géométrie de la cuvette 3 n'est pas figée et le bord supérieur 3c n'est pas nécessairement un bord annulaire continu.

Dans un mode de réalisation de moindre préférence, et ne faisant pas partie de l'invention, la cuvette 3 peut aussi être intégralement formée avec le caisson 2 ou logée de façon amovible dans le caisson 2 sans pouvoir coulisser horizontalement depuis sa position fonctionnelle. Dans ce cas, la cuvette 3 se situe dans une zone intermédiaire entre le compartiment inférieur 5 et le compartiment supérieur 6, qui ne débouche pas latéralement vers l'extérieur. Les granulés 8 réutilisables sont alors reçus dans un tamis 30 tel que représenté dans les figures 10A-10D qui est superposé à la cuvette 3 et directement accessible par l'ouverture latérale 12 du compartiment supérieur 6.

## Revendications

1. Bac à litière (1), en particulier pour chats, qui comporte :
- une cuvette (3) ayant un fond incliné vers au moins un passage inférieur d'évacuation de liquide ;
- un caisson (2) présentant :
- un compartiment supérieur (6) permettant de loger la cuvette;
- un compartiment inférieur (5) en regard dudit passage d'évacuation lorsque la cuvette (3) occupe une position fixe dite fonctionnelle à l'intérieur du compartiment supérieur (6) ;
- un tiroir (4) collecteur de liquide, le compartiment inférieur (5) étant adapté pour loger le tiroir collecteur en dessous du compartiment supérieur (6) ;
**caractérisé en ce que** le caisson (2) présente une première ouverture latérale (11) définissant un accès au compartiment inférieur et au moins une deuxième ouverture latérale (12) par laquelle le compartiment supérieur (6) débouche sur l'extérieur du caisson, la cuvette (3) et/ou un tamis (30) superposable à la cuvette (3) étant mobile en coulissement par rapport au caisson à travers ladite deuxième ouverture latérale (12) pour passer d'une position à l'autre entre une position sortie du caisson permettant l'entretien séparé de la cuvette et/ou du tamis (30), et ladite position fonctionnelle,
et **en ce que** le compartiment inférieur (5) est plus étroit que le compartiment supérieur (6) en étant délimité par des parois latérales (14, 15, 16) du caisson (2), lesdites parois latérales présentant une bordure supérieure au niveau de laquelle le compartiment supérieur débouche dans le compartiment inférieur, le compartiment inférieur (5) comportant au moins deux des
parois latérales (14, 15) avec chacune un bord supérieur qui fait saillie par rapport au tiroir collecteur (4) pour supporter la cuvette (3).

2. Bac à litière selon la revendication 1, **caractérisé en ce que** le caisson (2) présente au moins une paroi latérale (2b, 2c, 2d, 2e) avec un bord supérieur (2f) s'étendant autour d'une ouverture supérieure (O1) du caisson et **en ce que** dans le sens de la hauteur, le bord supérieur (2f) de la paroi latérale du caisson s'étend essentiellement à un niveau surélevé d'au moins 5 cm par rapport au niveau d'un bord supérieur (3c) de la cuvette (3), la distance entre la base du caisson et ledit bord supérieur de la cuvette étant comprise entre 5 et 15 cm.

3. Bac à litière selon l'une ou l'autre des revendications 1 et 2, dans lequel une ouverture supérieure (O1) du caisson (2), ledit passage d'évacuation (7) de la cuvette (3) et le tiroir collecteur (4) sont traversés par un même axe central (A) lorsque la cuvette est placée dans le compartiment supérieur (6) et le tiroir collecteur est placé dans le compartiment inférieur (5).

4. Bac à litière selon la revendication 3, dans lequel le caisson (2) est formé d'une seule pièce en matière plastique.

5. Bac à litière selon la revendication 4, dans lequel le caisson (2) présente, pour soutenir la cuvette (3), aux moins deux parois (60a) sensiblement planes surélevées par rapport à la base du caisson (2) et/ou des parois (17a, 17b 17c, 17d) à bord supérieur oblique réparties de part et d'autre d'au moins un plan qui contient ledit axe central (A), et préférentiellement réparties autour de deux plans perpendiculaires sécants au niveau dudit axe central.

6. Bac à litière selon la revendication 5, dans lequel lesdites deux parois (60a) sensiblement planes surélevées pour soutenir la cuvette (3) présentent chacune une face supérieure ayant une grande dimension comprise entre la moitié et la totalité d'une première dimension de la cuvette et une petite dimension inférieure à la moitié d'une deuxième dimension de la cuvette.

7. Bac à litière selon l'une quelconque des revendications 1 à 6, comprenant ledit tamis (30) qui est adapté pour être logé avec un faible jeu à l'intérieur de la cuvette (3) et de façon espacée de moins de 4 cm par rapport au fond (3a) de la cuvette, le tamis étant solidaire d'au moins un organe d'espacement par rapport au fond (3a) de la cuvette et présentant une forme générale concave avec un point bas qui est proximal par rapport au passage d'évacuation (7) de liquide de la cuvette.

8. Bac à litière selon l'une quelconque des revendications 1 à 6, dans lequel ledit fond (3a) de la cuvette (3) est adapté pour supporter directement et maintenir au niveau du compartiment supérieur (6) une litière dont les éléments constitutifs ont une dimension caractéristique de granulométrie au moins égale à 2mm.

9. Bac à litière selon l'une quelconque des revendications 1 à 8, dans lequel la deuxième ouverture latérale (12) est formée au dessus de la première ouverture latérale (11), sur un même côté du caisson (2).

10. Bac à litière selon l'une ou l'autre des revendications 1 à 6, comprenant ledit tamis (30) qui présente un fond (30a) et des parois latérales (30b) de façon à délimiter un volume intérieur pour recevoir un matériau de litière, le caisson (2) comprenant des moyens d'appui (52a, 52b) sur lesquels le tamis (30) repose dans ladite position fonctionnelle et permettant de déplacer le tamis indépendamment de la cuvette (3) et réciproquement.

11. Bac à litière selon la revendication 10, dans lequel seule la cuvette (3) est mobile en coulissement par rapport au caisson (2) à travers ladite deuxième ouverture latérale (12), le tamis (30) pouvant reposer sur deux rebords (60b) ou zones de soutien du caisson et étant bloqué en coulissement sur lesdits rebords (60b) par des moyens de butée (9).

12. Bac à litière selon la revendication 10 ou 11, dans lequel une face dite avant (35) du tamis (30) présente une échancrure (101) pour abaisser le niveau d'accès dans le volume intérieur où est disposé le matériau de litière, au moins une partie femelle (36) étant formée dans un angle inférieur de la face avant (35) pour coopérer avec une partie mâle complémentaire du caisson (2).

13. Bac à litière selon la revendication 12, dans lequel le niveau d'accès abaissé défini par l'échancrure (101) du tamis (30) est plus élevé que le niveau de la bordure supérieure du caisson (2).

14. Utilisation du bac à litière (1) selon l'une quelconque des revendications 1 à 13 pour contenir des granulés (8) hydrophobes et essentiellement non poreux dans un volume intérieur défini par la cuvette (3) ou par le tamis (30), le bac et les granulés étant préférentiellement à base de polypropylène.

## Patentansprüche

1. Einstreubehälter (1), insbesondere für Katzen, umfassend:
- eine Schale (3) mit einem Boden, der zu mindestens einem unteren Flüssigkeitsentleerungsdurchlass geneigt ist;
- einen Kasten (2), der Folgendes aufweist:
- eine obere Kammer (6), die die Aufnahme der Schale gestattet;
- eine untere Kammer (5) gegenüber dem Entleerungsdurchlass, wenn die Schale (3) eine feste, sogenannte Funktionsposition im Inneren der oberen Kammer (6) einnimmt;
- eine Flüssigkeitsauffangschublade (4), wobei die untere Kammer (5) dazu ausgeführt ist, die Auffangschublade unter der oberen Kammer (6) aufzunehmen;
**dadurch gekennzeichnet, dass** der Kasten (2) eine erste seitliche Öffnung (11), die einen Zugang zur unteren Kammer definiert, und mindestens eine zweite seitliche Öffnung (12), durch die die obere Kammer (6) in der Außenseite des Kastens mündet, aufweist, wobei die Schale (3) und/oder ein Sieb (30), die bzw. das der Schale (3) überlagert werden kann/können, bezüglich des Kastens durch die zweite seitliche Öffnung (12) verschiebbar ist/sind, um zwischen einer Ausgangsposition des Kastens, die das separate Inordnunghalten der Schale und/oder des Siebs (30) gestattet, und der Funktionsposition aus einer Position in eine andere zu gelangen,
und dass die untere Kammer (5) schmaler ist als die obere Kammer (6), indem sie durch Seitenwände (14, 15, 16) des Kastens (2) begrenzt wird, wobei die Seitenwände eine obere Umrandung aufweisen, an der die obere Kammer in der unteren Kammer mündet, wobei die untere Kammer (5) mindestens zwei der Seitenwände (14, 15) mit jeweils einem oberen Rand umfasst, der bezüglich der Auffangschublade (4) vorragt, um die Schale (3) zu stützen.

2. Einstreubehälter nach Anspruch 1, **dadurch gekennzeichnet, dass** der Kasten (2) mindestens eine Seitenwand (2b, 2c, 2d, 2e) mit einem oberen Rand (2f), der sich um eine obere Öffnung (O1) des Kastens erstreckt, aufweist und dass sich der obere Rand (2f) der Seitenwand des Kastens in Höhenrichtung im Wesentlichen auf einer höheren Ebene von mindestens 5 cm bezüglich der Ebene eines oberen Rands (3c) der Schale (3) erstreckt, wobei der Abstand zwischen der Basis des Kastens und dem oberen Rand der Schale zwischen 5 und 15 cm liegt.

3. Einstreubehälter nach Anspruch 1 oder 2, wobei in einer oberen Öffnung (O1) des Kastens (2) der Entleerungsdurchlass (7) der Schale (3) und die Auffangschublade (4) von einer gleichen mittleren Achse (A) durchquert werden, wenn die Schale in der oberen Kammer (6) platziert ist und die Auffangschublade in der unteren Kammer (5) platziert ist.

4. Einstreubehälter nach Anspruch 3, wobei der Kasten (2) einstückig aus Kunststoffmaterial gebildet ist.

5. Einstreubehälter nach Anspruch 4, wobei der Kasten (2) zum Stützen der Schale (3) mindestens zwei im Wesentlichen ebene Wände (60a), die bezüglich der Basis des Kastens (2) erhöht sind, und/oder Wände (17a, 17b, 17c, 17d) aufweist, die einen schrägen oberen Rand aufweisen und auf beiden Seiten mindestens einer Ebene verteilt sind, die die mittlere Achse (A) enthält, und vorzugsweise um zwei sich an der mittleren Achse schneidende senkrechte Ebenen verteilt sind.

6. Einstreubehälter nach Anspruch 5, wobei die beiden erhöhten im Wesentlichen ebenen Wände (60a) zum Stützen der Schale (3) jeweils eine Oberseite aufweisen, die ein großes Maß, das zwischen der Hälfte und der Gesamtheit eines ersten Maßes der Schale liegt, und ein kleines Maß, das kleiner als die Hälfte eines zweiten Maßes der Schale ist, hat.

7. Einstreubehälter nach einem der Ansprüche 1 bis 6, der das Sieb (30) umfasst, das zur Aufnahme mit einem geringen Spiel im Inneren der Schale (3) und mit einem Abstand von mindestens 4 cm bezüglich des Bodens (3a) der Schale ausgeführt ist, wobei das Sieb mit mindestens einem Abstandsglied bezüglich des Bodens (3a) der Schale fest verbunden ist und eine allgemein konkave Form mit einem Tiefpunkt aufweist, der bezüglich des Flüssigkeitsentleerungsdurchlasses (7) der Schale proximal ist.

8. Einstreubehälter nach einem der Ansprüche 1 bis 6, wobei der Boden (3a) der Schale (3) dazu ausgeführt ist, Streu, dessen Bestandteile ein charakteristisches Korngrößenmaß von mindestens gleich 2 mm aufweisen, direkt zu stützen und auf Höhe der oberen Kammer (6) zu halten.

9. Einstreubehälter nach einem der Ansprüche 1 bis 8, wobei die zweite seitliche Öffnung (12) über der ersten seitlichen Öffnung (11) an einer gleichen Seite des Kastens (2) ausgebildet ist.

10. Einstreubehälter nach einem der Ansprüche 1 bis 6, der das Sieb (30) umfasst, das einen Boden (30a) und Seitenwände (30b) aufweist, um einen Innenraum zur Aufnahme eines Streumaterials zu begrenzen, wobei der Kasten (2) Stützmittel (52a, 52b) umfasst, auf denen das Sieb (30) in der Funktionsposition aufliegt, und gestattet, das Sieb unabhängig von der Schale (3) zu bewegen, und umgekehrt.

11. Einstreubehälter nach Anspruch 10, wobei nur die Schale (3) bezüglich des Kastens (2) durch die zweite seitliche Öffnung (12) verschiebbar ist, wobei das Sieb (30) auf zwei vorstehenden Rändern (60b) oder Bereichen zum Abstützen des Kastens aufliegen kann und durch Anschlagmittel (9) daran gehindert wird, auf den vorstehenden Rändern (60b) zu gleiten.

12. Einstreubehälter nach Anspruch 10 oder 11, wobei eine als Vorderseite (35) bezeichnete Seite des Siebs (30) einen Einschnitt (101) aufweist, um die Höhe des Zugangs zu dem Innenraum, in dem das Streumaterial angeordnet ist, abzusenken, wobei mindestens ein Aufnahmeteil (36) in einem unteren Winkel der Vorderseite (35) ausgebildet ist, um mit einem komplementären Steckteil des Kastens (2) zusammenzuwirken.

13. Einstreubehälter nach Anspruch 12, wobei die durch den Einschnitt (101) des Siebs (30) definierte abgesenkte Zugangshöhe höher ist als die Höhe der oberen Umrandung des Kastens (2).

14. Verwendung des Einstreubehälters (1) nach einem der Ansprüche 1 bis 13 zur Aufnahme von hydrophobem und im Wesentlichen nicht porösem Granulat (8) in einem durch die Schale (3) und durch das Sieb (30) definierten Innenraum, wobei die Wanne und das Granulat vorzugsweise auf Polypropylen basieren.

## Claims

1. Litter tray (1), in particular for cats, comprising:
- a drain pan (3) having a bottom that is inclined towards at least one lower liquid discharge passage;
- a box (2) having:
-- an upper compartment (6) to accommodate the drain pan;
-- a lower compartment (5) facing said discharge passage when the drain pan (3) occupies a fixed position referred to as a functional position within the upper compartment (6);
-- a liquid collecting drawer (4), the lower compartment (5) being adapted to house the collecting drawer below the upper compartment (6);
**characterised in that** the box (2) has a first side opening (11) defining an access to the lower compartment and at least one second side opening (12) through which the upper compartment (6) opens out onto the outside of the box, the drain pan (3) and/or a screen (30) stackable on the drain pan (3) being able to move by sliding in relation to the box through said second side opening (12) to move from one position to the other between a position outside of the box, allowing it to be maintained separately from the drain pan and/or the screen (30), and said functional position,
and **in that** the lower compartment (5) is narrower than the upper compartment (6) by being defined by the side walls (14, 15, 16) of the box (2), said side walls having an upper edge at the level of which the upper compartment opens out into the lower compartment, the lower compartment (5) comprising at least two of the side walls (14, 15), each having an upper edge that protrudes in relation to the collecting drawer (4) to support the drain pan (3).

2. Litter tray according to claim 1, **characterised in that** the box (2) has at least one side wall (2b, 2c, 2d, 2e) with an upper edge (2f) extending around an upper opening (O1) of the box and **in that** in the direction parallel to its height, the upper edge (2f) of the side wall of the box essentially extends to a level such that it is raised by at least 5 cm in relation to the level of an upper edge (3c) of the drain pan (3), the distance between the bottom of the box and said upper edge of the drain pan being between 5 and 15 cm.

3. Litter tray according to either of claims 1 and 2, wherein an upper opening (O1) of the box (2), said discharge passage (7) of the drain pan (3) and the collecting drawer (4) are crossed by the same central axis (A) when the drain pan is placed in the upper compartment (6) and the collecting drawer is placed in the lower compartment (5).

4. Litter tray according to claim 3, wherein the box (2) is formed in one piece from a plastic material.

5. Litter tray according to claim 4, wherein the box (2) has, in order to support the drain pan (3), at least two walls (60a) that are substantially flat and raised in relation to the bottom of the drain pan (2) and/or walls (17a, 17b, 17c, 17d) with an upper oblique edge distributed on either side of at least one plane containing said central axis (A), and preferably distributed around two perpendicular secant planes at the level of said central axis.

6. Litter tray according to claim 5, wherein said two substantially flat, raised walls (60a) for supporting the drain pan (3) each have an upper surface with a large dimension of between half and the whole of a first dimension of the drain pan and a small dimension of less than half of a second dimension of the drain pan.

7. Litter tray according to any one of claims 1 to 6, comprising said screen (30), which is adapted to be housed with a low clearance level inside the drain pan (3) and spaced at a distance of less than 4 cm in relation to the bottom (3a) of the drain pan, the screen being secured to at least one spacing member in relation to the bottom (3a) of the drain pan and having a generally concave shape with a low point that is proximal in relation to the liquid discharge passage (7) of the drain pan.

8. Litter tray according to any one of claims 1 to 6, wherein said bottom (3a) of the drain pan (3) is adapted to directly support and maintain at the level of the upper compartment (6) a litter, the components of which have a characteristic grain size at least equal to 2 mm.

9. Litter tray according to any one of claims 1 to 8, wherein the second side opening (12) is formed above the first side opening (11), on the same side of the box (2).

10. Litter tray according to any one of claims 1 to 6, comprising said screen (30), which has a bottom (30a) and side walls (30b) such as to define an inner volume for receiving a litter material, the box (2) including supporting means (52a, 52b) on which the screen (30) rests in said functional position and enabling the screen to be moved independently from the drain pan (3) and inversely.

11. Litter tray according to claim 10, wherein only the drain pan (3) can be moved by sliding in relation to the box (2) through said second side opening (12), the screen (30) being capable of resting on two rims (60b) or supporting areas of the box and being locked and prevented from sliding on said rims (60b) by abutment means (9).

12. Litter tray according to claim 10 or 11, wherein one surface referred to as the front surface (35) of the screen (30) has a notch (101) for lowering the access level in the inner volume in which the litter material is placed, at least one female part (36) being formed in a lower corner of the front surface (35) to engage with a complementary male part of the box (2).

13. Litter tray according to claim 12, wherein the lowered access level defined by the notch (101) of the screen (30) is higher than the level of the upper edge of the box (2).

14. Use of the litter tray (1) according to any one of claims 1 to 13 to contain hydrophobic, essentially non-porous pellets (8) in an inner volume defined by the drain pan (3) or by the screen (30), the tray and the pellets preferably having a polypropylene base.
